# EUROPEAN PATENT APPLICATION

(11) **EP 4 831 886 A1**
(43) Date of publication of application: **28.10.2026**
(21) Application number: 24906566.5
(22) Date of filing: 20.12.2024
(51) Int. Cl.: G06Q 10/0633

(54) **SCHEDULING METHOD AND SYSTEM FOR AUTOMATED FLOW, AND ELECTRONIC DEVICE AND STORAGE MEDIUM**

(30) Priority: 22.12.2023 CN 202311787546
(71) Applicant: Megarobo Technologies Co., Ltd., Beijing 102208 (CN)
(72) Inventor: LIU, Jian, Beijing 102208 (CN)
(74) Representative: Grünecker Patent- und Rechtsanwälte PartG mbB
(86) International application number: PCT/CN2024/141131
(87) International publication number: WO 2025/131095

(57) **Abstract**

A scheduling method for an automated flow, the method comprising: on the basis of parameters of an automated flow, determining the number of throughputs of a target flow in the automated flow and an ordered operation set corresponding to each throughput; on the basis of the number of throughputs and the ordered operation sets, respectively determining the earliest start time of an operation to be scheduled of each throughput at the current moment, wherein the operation to be scheduled of each throughput is the first unscheduled operation in the ordered operation set corresponding to the throughput; at least on the basis of the earliest start time of each operation to be scheduled, determining one of the operations to be scheduled of the throughputs to be an operation that should be scheduled at the current moment; and determining an execution time of the operation that should be scheduled at the current moment, and shifting to executing the step of determining the earliest start time of the operation to be scheduled of each throughput at the next moment until the scheduling of all the operations in the ordered operation sets is completed. Also disclosed are a scheduling system for an automated flow, an electronic device, and a storage medium.

## Description

This application claims the priority of Chinese Patent Application No. 202311787546.1, filed with the China National Intellectual Property Administration on December 22, 2023, and entitled "SCHEDULING METHOD AND SYSTEM FOR AUTOMATED PROCESS, ELECTRONIC DEVICE, AND STORAGE MEDIUM," the entire contents of which are incorporated herein by reference.

### FIELD

The present disclosure relates to the field of automation technology, and specifically, to a scheduling method for an automated process, a scheduling system for an automated process, an electronic device, and a storage medium.

### BACKGROUND

An automated process, such as one for a laboratory, often includes a target process that needs to be repeatedly executed multiple times. For example, a pre-treatment process for consumables required for an experiment may need to be performed before the experiment, or a post-treatment process for the consumables may need to be performed after the experiment. Taking the pre-treatment process as an example, due to the large number of experimental consumables and the limited number of pre-treatment devices, the pre-treatment process often needs to be executed in multiple batches. Each execution of the pre-treatment process can be considered as one run, such that the automated process includes multiple runs of the pre-treatment process.

In some cases, multiple pre-treatment devices are required to perform multiple operations to complete one run of the pre-treatment process. Taking the pre-treatment process of washing a well plate as an example, each run of the pre-treatment process requires the collaboration of three types of pre-treatment devices: a robotic arm, a plate station for storing well plates, and a microplate washer. Due to the limited number of these pre-treatment devices and the limited number of plate positions on the plate station and the microplate washer, it is impossible to execute the multiple runs of the pre-treatment process completely in parallel. However, executing the multiple runs of the pre-treatment process completely in series results in low efficiency. Therefore, it is necessary to plan and schedule all operations involved in the multiple runs of the pre-treatment process to determine the execution times of these operations.

Existing scheduling methods usually arrange each run of the target process one by one sequentially. For example, the operations in the pre-treatment process for the first run are scheduled first, and then the pre-treatment process for the next run is scheduled. In this approach, the operations in the pre-treatment process for each run are arranged independently, without comprehensively considering other runs. Therefore, this scheduling approach does not fully utilize the pre-treatment devices, leading to lower execution efficiency of the automated process.

### SUMMARY

To at least partially solve the problems existing in the prior art, according to a first aspect of the present disclosure, there is provided a scheduling method for an automated process, including:
determining, according to parameters of the automated process, a run count of a target process in the automated process and an ordered operation set corresponding to each run, wherein the run count indicates a number of repeated executions of the target process, the run count is greater than 1, and the ordered operation set is an ordered set of operations involved in completing a single execution of the target process;
respectively determining, according to the run count and the ordered operation set, an earliest start time of a to-be-scheduled operation of each run at a current moment, wherein the to-be-scheduled operation of each run is a first unscheduled operation in the ordered operation set corresponding to the run, and the unscheduled operation is an operation for which an execution time has not been determined yet;
determining, at least based on the earliest start time of each to-be-scheduled operation, one of the to-be-scheduled operations of the runs as a current-to-be-scheduled operation at the current moment; and
determining an execution time of the current-to-be-scheduled operation at the current moment, and proceeding to perform a step of determining the earliest start time of the to-be-scheduled operation of each run at a next moment, until scheduling of all operations in each ordered operation set is completed.

In an embodiment, determining the execution time of the current-to-be-scheduled operation at the current moment includes:
determining an earliest start time of the current-to-be-scheduled operation as a start execution time of the current-to-be-scheduled operation; and
calculating a sum of the determined start execution time of the current-to-be-scheduled operation and a duration of the current-to-be-scheduled operation as an end execution time of the current-to-be-scheduled operation.

In an embodiment, respectively determining the earliest start time of the to-be-scheduled operation of each run at the current moment includes:
determining the to-be-scheduled operation of each run at the current moment; and
for the to-be-scheduled operation of each run,
   determining, according to the ordered operation set, a preceding operation of the to-be-scheduled operation, wherein in the ordered operation set corresponding to the run, the preceding operation is an operation immediately preceding the to-be-scheduled operation; and
   determining the earliest start time of the to-be-scheduled operation at least based on an end time of the preceding operation.

In an embodiment, the method further includes:
determining, according to the parameters of the automated process, an execution device set of the target process;
determining, according to the run count, the execution device set, and the ordered operation set, devices associated with respective operations in the ordered operation set, wherein the devices associated with respective operations at least comprise execution devices of the operations, and the execution device is a device for executing the operation; and
determining a release time of each of the devices associated with respective operations at the current moment, wherein the release time indicates an idle time of the device, and at an initial moment, the release time of each device is 0.

In an embodiment, determining the earliest start time of the to-be-scheduled operation at least based on the end time of the preceding operation further includes:
determining a maximum value of the release times of the devices associated with the to-be-scheduled operation at the current moment;
determining the earliest start time of the to-be-scheduled operation according to the maximum value and the end time of the preceding operation.

In an embodiment, after determining the start execution time and the end execution time of the current-to-be-scheduled operation, the method further includes:
updating the release time of the execution device of the current-to-be-scheduled operation to be the end execution time of the current-to-be-scheduled operation.

In an embodiment, determining the earliest start time of the to-be-scheduled operation includes:
determining a larger one of the maximum value and the end time of the preceding operation as the earliest start time of the to-be-scheduled operation.

In an embodiment, determining the earliest start time of the to-be-scheduled operation includes:
determining, according to first occupancy information indicating upcoming position occupancy on the associated device by the to-be-scheduled operation and second occupancy information indicating position occupancy on the associated device at the current moment, whether a position conflict exists for the to-be-scheduled operation; and
if it is determined that a position conflict exists for the to-be-scheduled operation, determining a preset supremum time as the earliest start time of the to-be-scheduled operation; wherein the preset supremum time is greater than the end time of the preceding operation and the release time of any device.

In an embodiment, after determining one of the to-be-scheduled operations of the runs as the current-to-be-scheduled operation, the method further includes:
updating the second occupancy information indicating position occupancy on the associated device by the current-to-be-scheduled operation.

In an embodiment, the method further includes:
determining a busy duration of the to-be-scheduled operation of each run at the current moment, wherein the busy duration is equal to a cumulative duration of all unscheduled operations in the ordered operation set corresponding to the run at the current moment;
determining one of the to-be-scheduled operations of the runs as the current-to-be-scheduled operation includes:
   adopting a priority assignment principle, determining a priority of the to-be-scheduled operation of each run at least based on the earliest start time of each to-be-scheduled operation at the current moment and the busy duration of each to-be-scheduled operation, and determining one with a highest priority as the current-to-be-scheduled operation;
   wherein a to-be-scheduled operation with a smaller earliest start time has a higher priority; and for a plurality of to-be-scheduled operations with a same earliest start time, one with a larger busy duration has a higher priority.

In an embodiment, the method further includes:
creating an index for each operation in the ordered operation set corresponding to each run, and determining an index value of each index, wherein an operation with a more front position in the ordered operation set has a smaller index value, and operations of a same type in different runs have a same index value;
determining the priority of the to-be-scheduled operation of each run includes:
   determining the priority of the to-be-scheduled operation of each run based on the earliest start time of each to-be-scheduled operation at the current moment, the busy duration of each to-be-scheduled operation, and a value of a first index;
   wherein the first index is an index of each to-be-scheduled operation or an index of the preceding operation of the to-be-scheduled operation, and for a plurality of to-be-scheduled operations with a same earliest start time and a same busy duration, one with a smaller index value has a higher priority.

In an embodiment, a difference between index values of two adjacent operations in the ordered operation set is 1, and after determining one of the to-be-scheduled operations of the runs as the current-to-be-scheduled operation, the method further includes:
updating an index value of the index of the to-be-scheduled operation of a current run or an index of the preceding operation of the to-be-scheduled operation, wherein the current run is a run to which the determined current-to-be-scheduled operation belongs, and an updated index value is equal to a pre-update index value plus 1.

In an embodiment, the method further includes:
creating a two-dimensional array for a scheduling result according to the run count, the ordered operation set, and the index values of the operations in the ordered operation set;
wherein elements in the two-dimensional array comprise an index value of each operation in the ordered operation set corresponding to each run, a start execution time of each operation, an end execution time of each operation, and a sequence number of the run to which each operation belongs;
after determining the start execution time and the end execution time of the current-to-be-scheduled operation, the method further includes:
   updating the two-dimensional array according to the determined start execution time and end execution time of the current-to-be-scheduled operation, so that after all operations in each ordered operation set become the current-to-be-scheduled operations, the target process is executed according to the updated two-dimensional array.

According to a second aspect of the present disclosure, there is provided a scheduling system for an automated process, including:
a first determination module, configured to determine, according to parameters of the automated process, a run count of a target process in the automated process and an ordered operation set corresponding to each run, wherein the run count indicates a number of repeated executions of the target process, the run count is greater than 1, and the ordered operation set is an ordered set of operations involved in completing a single execution of the target process;
a second determination module, configured to respectively determine, according to the run count and the ordered operation set, an earliest start time of a to-be-scheduled operation of each run at a current moment, wherein the to-be-scheduled operation of each run is a first unscheduled operation in the ordered operation set corresponding to the run, and the unscheduled operation is an operation for which an execution time has not been determined yet;
a third determination module, configured to determine, at least based on the earliest start time of each to-be-scheduled operation, one of the to-be-scheduled operations of the runs as a current-to-be-scheduled operation at the current moment; and
a fourth determination module, configured to determine an execution time of the current-to-be-scheduled operation at the current moment, and proceed to perform a step of determining the earliest start time of the to-be-scheduled operation of each run at a next moment, until scheduling of all operations in each ordered operation set is completed.

According to a third aspect of the present disclosure, there is provided an electronic device, including a processor and a memory, characterized in that the memory stores computer program instructions, and the computer program instructions, when executed by the processor, implement any of the foregoing scheduling method for an automated process.

According to a fourth aspect of the present disclosure, there is provided a storage medium, having program instructions stored thereon, characterized in that the program instructions, when executed, implement any of the foregoing scheduling method for an automated process.

The above-described scheduling method for an automated process performs scheduling sequentially for each operation in the ordered operation set corresponding to each run, and determines the execution time of each operation by comprehensively considering the situations of all runs. The scheduling result can effectively reduce the waiting time of devices, more fully utilize the devices, make the scheduling more reasonable, and improve the execution efficiency of the automated process.

A series of simplified concepts are introduced in the summary, which will be further described in detail in the detailed description of the embodiments. The content of the summary is not intended to limit the key features and essential technical features of the claimed technical solution, nor is it intended to determine the scope of protection of the claimed technical solution.

The advantages and features of the present disclosure will be described in detail below with reference to the accompanying drawings.

### BRIEF DESCRIPTION OF THE DRAWINGS

The following drawings of the present disclosure are included as part of the present disclosure for understanding the present disclosure. The drawings show embodiments of the present disclosure and descriptions thereof, which are used to explain the principles of the present disclosure. In the drawings,
FIG. 1 shows a schematic flowchart of a scheduling method for an automated process according to an embodiment of the present disclosure;
FIG. 2a shows a scheduling timing diagram after scheduling according to a scheduling method in the prior art;
FIG. 2b shows a scheduling timing diagram after scheduling according to a scheduling method of an embodiment of the present disclosure;
FIG. 3 shows a flowchart of a scheduling method for an automated process according to another embodiment of the present disclosure;
FIG. 4 shows a schematic block diagram of a scheduling system for an automated process according to an embodiment of the present disclosure; and
FIG. 5 shows a schematic block diagram of an electronic device according to an embodiment of the present disclosure.

### DETAILED DESCRIPTION

In the following description, numerous specific details are set forth in order to provide a thorough understanding of the present disclosure. However, those skilled in the art will appreciate that the following description is merely illustrative of preferred embodiments of the present disclosure, and the present disclosure may be practiced without one or more of these specific details. Furthermore, to avoid confusion with the present disclosure, some technical features well known in the art are not described in detail.

As previously mentioned, an automated process often includes a target process that needs to be repeatedly executed multiple times, i.e., multiple runs of the target process. Existing scheduling methods usually arrange each run of the target process one by one sequentially. Operations in each run of the target process are arranged independently, without comprehensively considering other runs. Therefore, this scheduling method does not fully utilize the devices, leading to lower execution efficiency of the automated process.

To at least partially solve the above technical problems, according to one aspect of the present disclosure, there is provided a scheduling method for an automated process. In this method, during the scheduling process, each time an operation is scheduled, the earliest start times of the to-be-scheduled operations of each run are comprehensively considered to determine the current to-be-scheduled operation, thereby enabling more reasonable scheduling of the automated process. The scheduling result can effectively reduce the waiting time of devices, maximize device utilization, and thus effectively improve the execution efficiency of the automated process.

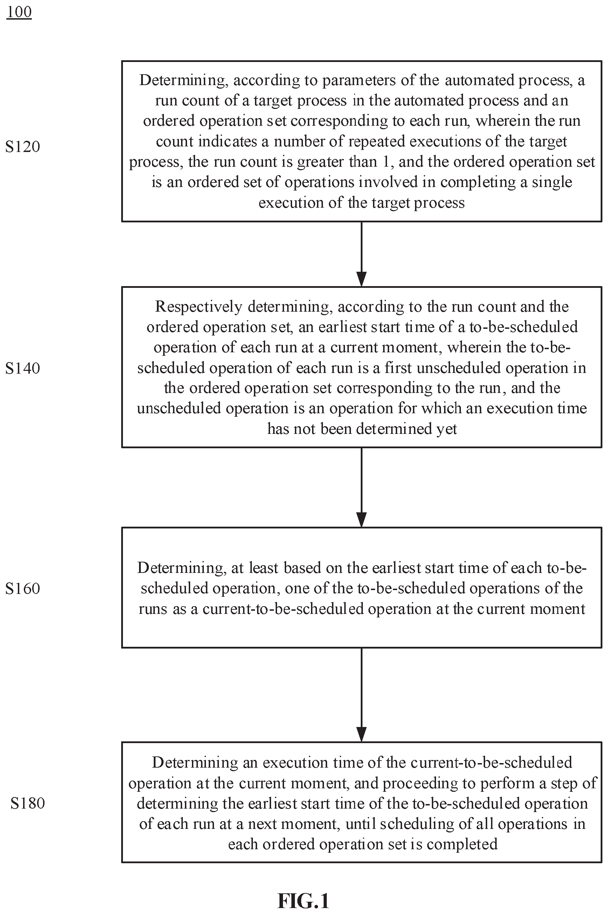

FIG. 1 shows a schematic flowchart of a scheduling method 100 for an automated process according to an embodiment of the present disclosure. As shown, the method 100 includes steps S120, S140, S160, and S180.

In step S120, according to parameters of the automated process, a run count of a target process in the automated process and an ordered operation set corresponding to each run are determined. The run count indicates the number of repeated executions of the target process, the run count is greater than 1, and the ordered operation set is an ordered set of operations involved in completing a single execution of the target process.

According to an embodiment of the present disclosure, the target process can be any partial process in the automated process. Of course, in some specific examples, the target process can also be a complete process in the automated process. The content of the target process can be arbitrary, and is not limited herein. In the embodiment of the present disclosure, the target process is executed multiple times, so it can also be said that the run count of the target process is greater than 1. The run count and the ordered operation set of the target process can be obtained by any suitable method. In one example, a user can edit the run count of the target process in the automated process through an operable control in a process editing interface. In this step, the run count of the target process can be obtained by parsing the automated process. Similarly, the ordered operation set corresponding to each run can be obtained from the parsed data after parsing the automated process. The ordered operation set can be an ordered set of operations involved in completing a single execution of the target process. Therefore, the ordered operation sets corresponding to different runs can be the same. The only difference is that the consumables operated by the operations in the ordered operation sets for different runs are different.

The following description will be made by taking, as an example, a target process that is a pre-treatment process in a laboratory automation system. It can be understood that in an automated process in a laboratory, experimental consumables (e.g., well plates) used subsequently are usually pre-treated before the experiment/test. For example, to prevent dirt on the well plate from interfering with the experiment, the well plate needs to be cleaned. Alternatively, operations such as adding some enzymes to the well plate as required by the experiment may require the use of pre-treatment devices. By way of example, the pre-treatment device is a device or a device pool for plate transfer operations performed by a robotic arm in the pre-operation and post-operation. The pre-treatment device corresponding to the pre-treatment process not only corresponds to the pre-treatment operation but also some auxiliary operations performed for the pre-treatment operation, and these auxiliary operations include pre-operations performed before the pre-treatment operation and/or post-operations performed after the pre-treatment operation. The auxiliary devices in this embodiment can include transfer devices such as robotic arms. Taking the target process as a pre-treatment process for washing a well plate as an example. The pre-treatment devices include a sequential access plate station, a random access plate station, a robotic arm, and a microplate washer. The sequential access plate station is used to store stacked well plates, and the random access plate station includes multiple positions, each position for storing one well plate.

Exemplarily, a pre-treatment process for washing a well plate mainly includes the following 4 steps: 1. The robotic arm transfers the well plate (consumable) from the sequential access plate station to a position in the random access plate station for storage; 2. The robotic arm transfers the well plate from the random access plate station to the microplate washer; 3. The microplate washer washes the well plate; 4. The robotic arm transfers the well plate from the microplate washer back to the random access plate station; 5. The robotic arm transfers the well plate from the random access plate station back to the sequential access plate station. It can be understood that in this pre-treatment process, washing the well plate by the microplate washer takes a relatively long time. Except for the step of washing the well plate by the microplate washer, the remaining four steps are transfer operations performed by the robotic arm, and each operation performed by the robotic arm also takes a certain amount of time. Furthermore, in some cases, the consumable (well plate) needs to stay at the intermediate position (random access plate station) for at least a period of time before being transferred to the next position. Therefore, in this pre-treatment process, the storage time of the consumable at the intermediate position also needs to be considered. Referring to Table 1 below, for the case where the target process is the above pre-treatment process, each run of the target process includes the seven operations in the table (each operation corresponds to one step), and each operation has its corresponding duration. As shown in Table 1, the well plate stays in the random access plate station for at least 1 second.

**Table 1**

| **Operation** | **Description** | **Ope ratio n (seconds)** | **Duration** |
|---|---|---|---|
| 1 | Sequential access plate station to random access plate station | 45 | |
| 2 | Storage in random access plate station | 1 | |
| 3 | Random access plate station to microplate washer | 45 | |
| 4 | Microplate washer operation | 270 | |
| 5 | Microplate washer to random access plate station | 45 | |
| 6 | Storage in random access plate station | 1 | |
| 7 | Random access plate station to sequential access plate station | 45 | |

In the embodiment of the present disclosure, the number of executions of the target process, or the run count, can be m, where m can be any number greater than 1. It can be understood that in the present embodiment, each run of the target process is serial, but m runs of the target process are not serial with one another; there may be parallelism to ensure the execution efficiency of the automated process. The following description will be made by taking the run count m=6 as an example to illustrate the scheduling method for executing the target process 6 times. It can be understood that for this target process, the ordered operation set corresponding to each run can be an operation set consisting of operations 1, 2, 3, 4, 5, 6, and 7 in the table arranged sequentially.

In Step S140, an earliest start time of a to-be-scheduled operation of each run at a current moment is determined according to the run count and the ordered operation set. The to-be-scheduled operation of each run is the first one of unscheduled operations in the ordered operation set corresponding to the run, and an unscheduled operation is an operation for which the execution time has not been determined yet.

According to an embodiment of the present disclosure, the scheduling of 6 runs of the target process can be transformed into scheduling of 42 operations. In other words, the execution time of each operation in the ordered operation sets of the 6 runs can be determined one by one. In this step, the current moment can be a certain moment during the scheduling process. For example, at the start moment of scheduling, the execution time of one of the 42 operations (for simplicity, it can be called a first operation, which can be any one of the operations 1 of the 6 runs) is determined first. Then, at the next moment, the execution time of a second operation is determined... Finally, at the last moment of scheduling, the execution time of the 42nd operation is determined. Taking the current moment as a moment after determining the execution time of the 20th operation as an example, at this time, for run 1, the execution times of operations 1, 2, and 3 may have been determined; therefore, operations 4, 5, 6, and 7 of run 1 are all unscheduled operations at the current moment. Since operation 4 has a higher order in the ordered operation set than other unscheduled operations, the to-be-scheduled operation of run 1 at the current moment is operation 4.

In this step, the earliest start time of operation 4 of run 1 can be determined using any suitable determination logic based on the run count and the ordered operation set. The to-be-scheduled operation of each run at each current moment can be determined using the method in the above example, and the earliest start time of the to-be-scheduled operation of each run can be determined using a suitable calculation method. For example, at the start moment of scheduling, the earliest start time of operation 1 of each run is determined to be 0. In the middle stage of scheduling, for the to-be-scheduled operation of each run, the earliest start time of the to-be-scheduled operation can be determined at least according to the execution time of the scheduled operation (the operation for which the execution time has been determined) in the ordered operation set corresponding to the run and the execution time of the scheduled operation in other runs that is associated with the to-be-scheduled operation. Exemplarily, a scheduled operation associated with the to-be-scheduled operation can be an operation that occupies the same device as the to-be-scheduled operation. Exemplarily, based on the situation of devices that need to be occupied by respective operations in the ordered operation set of each run and the devices executing the target process, a device can be assigned for the operations of each run. For example, the correspondence between operations and devices can be determined, and the operation associated with each to-be-scheduled operation can be determined based on this correspondence. Then, the earliest start time of the to-be-scheduled operation can be determined based on the execution time of the scheduled operation in the ordered operation set corresponding to the run and the execution time of the scheduled operation in other runs that is associated with the to-be-scheduled operation.

Specifically, taking the above pre-treatment process as an example, one pre-treatment device can be assigned for each run, and then relevant operations in the runs corresponding to the same device can be associated with each other, so as to take the execution time of the associated operations into account when determining the earliest start time of these operations. It can be understood that the primary operation in the pre-treatment process is performed by the pre-treatment device. Exemplarily, in some cases, due to the limited number of pre-treatment devices or the limited number of positions in the pre-treatment device, the scheduling should also consider the occupancy of the pre-treatment device. For example, in the above example, the pre-treatment devices include only two microplate washers: microplate washer 1 and microplate washer 2. When microplate washer 1 is performing operation 4 of the pre-treatment process for one run, if operation 4 is to be performed in another run of the pre-treatment process, only microplate washer 2 can be used, i.e., the well plate is to be washed by microplate washer 2. If both microplate washers are occupied at a certain moment, the pre-treatment process for another run cannot perform operation 4, and must wait until a microplate washer becomes idle to perform the washing operation.

Exemplarily, for the case where the pre-treatment devices include only two microplate washers (e.g., microplate washer 1 and microplate washer 2) and the run count of the pre-treatment process is 6, one microplate washer can be assigned for each run. From Table 1, it can be seen that the working duration of the microplate washer is much longer than that of other operations. Therefore, the microplate washers can be allocated reasonably so that each run has an available microplate washer.

**Table 2**

| **Run** | **Device** |
|---|---|
| 1 | Microplate Washer 1 |
| 2 | Microplate Washer 2 |
| 3 | Microplate Washer 1 |
| 4 | Microplate Washer 2 |
| 5 | Microplate Washer 1 |
| 6 | Microplate Washer 2 |

Thus, operation 4 in the pre-treatment process for run 1, run 3, and run 5 can be executed using microplate washer 1, and operation 4 in the pre-treatment process for run 2, run 4, and run 6 can be executed using microplate washer 2. Exemplarily, based on the correspondence between microplate washers and runs, the washing operations in the ordered operation sets of runs corresponding to the same microplate washer can be associated with each other. For example, referring to Table 1 and Table 2, at the current moment, the to-be-scheduled operation of run 1 is operation 5, the to-be-scheduled operation of run 3 is also operation 5, and the to-be-scheduled operation of run 6 is operation 4. It can be understood that since runs 1, 3 and 6 correspond to microplate washer 2, the washing operations (operation 4) of these three runs are associated with each other. And the execution time of the washing operation in each of run 1 and run 3 has been determined already. Therefore, the execution time of the washing operation of run 6 can be determined based on the execution time of the washing operation of run 1 and the execution time of the washing operation of run 3 as well as the end execution time of operation 3 of run 1. For example, the start execution time of the washing operation of run 6 can be determined based on the maximum among the end execution time of the washing operation in run 1, the end execution time of the washing operation in run 3, and the end execution time of operation 3 in run 1. Of course, in other examples, other factors affecting the scheduling can also be considered to accurately determine the execution time of the to-be-scheduled operation of each run at the current moment.

In Step S160, one of the to-be-scheduled operations of the runs is determined as a current-to-be-scheduled operation at the current moment at least based on the earliest start time of each to-be-scheduled operation.

In one example, the to-be-scheduled operation of a run with the smallest determined earliest start time can be directly determined as the current-to-be-scheduled operation at the current moment. In other examples, other screening factors can also be combined to select one from the to-be-scheduled operations of the runs as the current-to-be-scheduled operation at the current moment, and it is not limited herein.

In Step S180, the execution time of the current-to-be-scheduled operation at the current moment is determined, and the procedure proceeds to perform the step of determining the earliest start time of the to-be-scheduled operation of each run at a next moment, until the scheduling of all operations in each ordered operation set is completed.

For example, after determining the execution time of operation 1 of run 1, the procedure proceeds to perform the step of determining the earliest start time of the to-be-scheduled operation of each run at a next moment, until the scheduling of all operations in each ordered operation set is completed. Exemplarily, after determining a current-to-be-scheduled operation, the scheduling pattern formed by all determined current-to-be-scheduled operations can be called the current pattern. The to-be-scheduled operation of each run at the current moment can be the to-be-scheduled operation of each run under the current pattern, in other words, it can be the operation that needs to be started first among all unscheduled operations of each run under the current pattern. In other words, once the current-to-be-scheduled operation is determined, it will not be modified, and new scheduling is only performed under the currently determined state. This ensures the sequential execution of the program logic and prevents disorder.

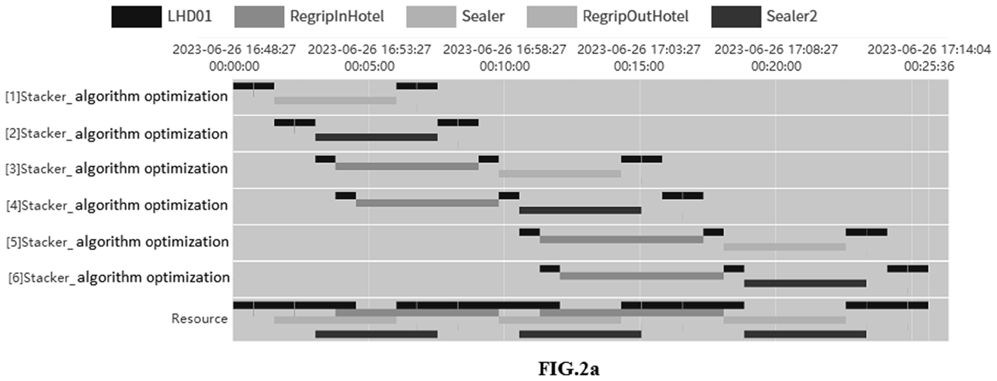

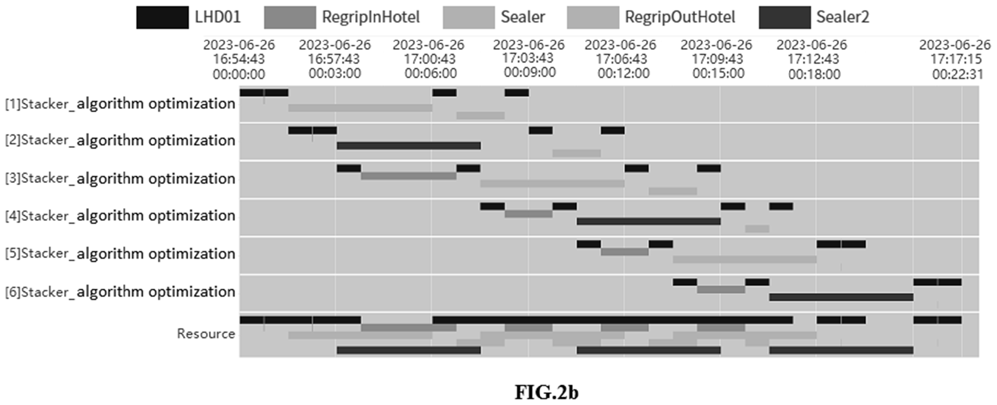

FIG. 2a shows a scheduling timing diagram after scheduling according to the scheduling method in the prior art. FIG. 2b shows a scheduling timing diagram after scheduling according to the scheduling method of an embodiment of the present disclosure. As shown in FIG. 2a, in the prior art, all operations of the previous run are scheduled before scheduling the operations of the next run. That is, after the scheduling of run 1 is completed, run 2 is scheduled, after the scheduling of run 2 is completed, run 3 is scheduled, and so on. It can be seen that this scheduling reduces the utilization efficiency of the microplate washers; the interval between two operations of microplate washer 1 is 227 seconds, and the intervals between two operations of microplate washer 2 are 181 seconds and 228 seconds, respectively, resulting in very low process execution efficiency. For a pre-treatment process with a run count of 6, the total time to complete the entire process is 25 minutes and 36 seconds. If the number of runs continues to increase, the idle time of the same microplate washer will continue to increase as the scheduling progresses.

As shown in FIG. 2b, according to the scheduling method for an automated process of the embodiment of the present disclosure, the waiting time of the microplate washer can be effectively shortened; the interval between two operations of microplate washer 1 is shortened to 90 seconds, and the intervals between two operations of microplate washer 2 are shortened to 180 seconds and 90 seconds, respectively. Even if the number of runs continues to increase, the intervals between two operations of microplate washer 1 and microplate washer 2 will be maintained within 90 seconds. For a pre-treatment process with a run count of 6, the total time of the entire process is shortened to 22 minutes and 31 seconds. Compared with the prior art, after scheduling the target process according to the scheduling method of the embodiment of the present disclosure, the execution time of the target process can be greatly shortened.

The above-described scheduling method for an automated process performs scheduling sequentially for each operation in the ordered operation set corresponding to each run, and determines the execution time of each operation by comprehensively considering the situations of each run. The scheduling result can effectively reduce the waiting time of devices, more fully utilize the devices, making the scheduling more reasonable and the execution efficiency of the automated process higher.

Exemplarily, determining the execution time of the current-to-be-scheduled operation at the current moment may include: determining the earliest start time of the current-to-be-scheduled operation as a start execution time of the current-to-be-scheduled operation; and calculating a sum of the determined start execution time and a duration of the current-to-be-scheduled operation as the end execution time of the current-to-be-scheduled operation.

Taking run 1 as an example, if operation 1 of run 1 is determined as the current-to-be-scheduled operation, its start execution time can be determined as its earliest start time t0. Then, its end execution time can be calculated. As shown in Table 1, the duration of operation 1 is 5 seconds, so the end execution time of operation 1 of run 1 can be determined as t0+5.

This scheme has a simpler calculation logic, a smaller calculation amount, and a more accurate determined execution time, enabling real-time and accurate scheduling of the automated process.

Exemplarily, in step S140, respectively determining the earliest start time of the to-be-scheduled operation of each run at the current moment includes the following steps.

In Step S141: the to-be-scheduled operation of each run at the current moment is determined.

In Step S142, for the to-be-scheduled operation of each run, a preceding operation of the to-be-scheduled operation is determined according to the ordered operation set.

In Step S143, for the to-be-scheduled operation of each run, the earliest start time of the to-be-scheduled operation is determined at least according to an end time of the preceding operation.

Continuing to refer to FIG. 2b, when operation 3 of run 2 ends, the earliest start time of the to-be-scheduled operation of each run at the current moment is determined. First, step S141 is executed to determine the to-be-scheduled operation of each run at the current moment. At this time, the to-be-scheduled operation of run 1 is operation 5, the to-be-scheduled operation of run 2 is operation 4, and the to-be-scheduled operations of runs 3, 4, 5, and 6 are all operation 1. Then, step S142 can be executed to determine, for the to-be-scheduled operation of each run, according to the ordered operation set shown in Table 1, the preceding operation of the to-be-scheduled operation. The preceding operation is the operation immediately preceding the to-be-scheduled operation. The preceding operation of run 1 is operation 4, the preceding operation of run 2 is operation 3, and runs 3, 4, 5, and 6 have no preceding operation. Next, step S143 can be executed to determine, for the to-be-scheduled operation of each run, the earliest start time of the to-be-scheduled operation at least according to the end time of the preceding operation. The end time of the preceding operation of run 1 is approximately 179 seconds, the preceding operation of run 2 has ended, and runs 3-6 have no preceding operation, so the earliest start time of the to-be-scheduled operation is the current moment. Among these, one of operation 4 of run 2 and operations 1 of runs 3-6 can be determined as the current current-to-be-scheduled operation. Exemplarily, for determining the order of these operations 1, other considerations can also be combined to comprehensively determine the current current-to-be-scheduled operation. This scheme will be explained later and will not be repeated here.

The above scheme for determining the earliest start time of the to-be-scheduled operation based on the end time of the preceding operation of each to-be-scheduled operation has a more reasonable execution logic, can more accurately determine the earliest start time of the to-be-scheduled operation, and thus the scheduling result is more reasonable.

Exemplarily, the scheduling method for an automated process further includes: determining, according to the parameters of the automated process, an execution device set of the target process; determining, according to the run count, the execution device set, and the ordered operation set, devices associated with respective operations in the ordered operation set; where the devices associated with respective operations at least include the execution devices of the operations, and the execution device is a device for executing the operation; determining a release time of each of the devices associated with respective operations at the current moment. The release time indicates the idle time of the device, and at the initial moment, the release time of each device is 0.

The execution device set can be obtained according to the parsing result of the automated process. Taking operation 1 of run 1 as an example, the robotic arm transfers the well plate from the sequential access plate station to the random access plate station, and the execution device set includes the sequential access plate station, the robotic arm, and the random access plate station. For example, the aforementioned robotic arm. It can be understood that one robotic arm cannot simultaneously perform the following two tasks: transferring the well plate from the sequential access plate station to the random access plate station, and transferring the well plate from the random access plate station to the microplate washer. Therefore, when scheduling, it is necessary to consider whether the execution device is occupied at the current moment.

In this step, any suitable determination logic can be used to determine the release time of each of the devices associated with respective operations at the current moment based on the run count, the execution device set, and the ordered operation set. For example, taking operation 4 of run 1 as an example, it is a washing operation, so the execution device of this operation is microplate washer 1. Therefore, its associated devices at least include microplate washer 1. In some examples, for the to-be-scheduled operation that is a transfer operation, such as operation 3 of run 1, this operation requires the robotic arm to transfer the consumable from the random access plate station to the microplate washer. Therefore, it is necessary to ensure that neither the robotic arm nor the microplate washer is occupied. Thus, the associated devices of operation 3 can also include the destination device of the transfer, i.e., the device to which the material is transferred after the transfer, i.e., the microplate washer. In other cases, the associated devices of the transfer operation can also include the source device, i.e., the device occupied before the transfer. The release time indicates the idle time of the device, i.e., at what point in time the device is freed from occupancy so that it can be called for the next task. At the initial moment, the release time of each device is 0. As the device is used, its release time will increase cumulatively. In this way, by setting the release time of the device, erroneous operation of the device can be avoided. In subsequent scheduling, the release time of each device will be modified according to the current scheduling situation.

Exemplarily, in step S143, determining the earliest start time of the to-be-scheduled operation at least according to the end time of the preceding operation further includes: determining a maximum value of the release times of the devices associated with the to-be-scheduled operation at the current moment, and determining the earliest start time of the to-be-scheduled operation according to the maximum value and the end time of the preceding operation.

As described above, among the devices associated with the to-be-scheduled operation, if any one is performing other work, the to-be-scheduled operation cannot start. If the preceding operation has not ended, the to-be-scheduled operation also cannot start. Therefore, the to-be-scheduled operation can start only when all associated devices are released and the preceding operation has ended.

Exemplarily, determining the earliest start time of the to-be-scheduled operation includes determining the larger one of the maximum value and the end time of the preceding operation as the earliest start time of the to-be-scheduled operation. For example, if the end time of the preceding operation is earlier than the maximum value of the release times of the associated devices, the maximum value of the release times of the associated devices is determined as the earliest start time of the to-be-scheduled operation. For another example, if the determined end time of the preceding operation is greater than the maximum value of the release times of the associated devices, the earliest start time of the to-be-scheduled operation is the end time of the preceding operation.

In this scheme, the earliest start time of the to-be-scheduled operation is comprehensively determined based on the maximum value of the release times of the associated devices of the to-be-scheduled operation and the end time of the preceding operation of the to-be-scheduled operation. This scheduling logic is more reasonable, and the scheduling result is more accurate.

Exemplarily, after determining the start execution time and the end execution time of the current-to-be-scheduled operation, the scheduling method for an automated process further includes: updating the release time of the execution device of the current-to-be-scheduled operation to the end execution time of the current-to-be-scheduled operation.

Continuing to take the robotic arm as an example, after the robotic arm finishes its operation, it is idle. Therefore, the release time of the robotic arm can be updated to the end time of the robotic arm operation, so that the robotic arm can be immediately assigned to the next task. This scheme of updating the device release time in real time not only ensures the accuracy of the entire scheduling result but also ensures high scheduling efficiency.

Exemplarily, determining the earliest start time of the to-be-scheduled operation includes: determining, according to first occupancy information indicating upcoming position occupancy on the associated device by the to-be-scheduled operation and second occupancy information indicating position occupancy on the associated device at the current moment, whether a position conflict exists for the to-be-scheduled operation; if it is determined that a position conflict exists for the to-be-scheduled operation, determining a preset supremum time as the earliest start time of the to-be-scheduled operation. The preset supremum time is greater than the end time of the preceding operation and the release time of any device.

Referring to FIG. 2a, taking runs 3, 4, 5, and 6 as an example, the random access plate station can provide 2 inlet plate positions and 2 outlet plate positions. It can be seen that before run 3 transfers the well plate to microplate washer 1, operation 2 occupies one inlet plate position, and before run 4 transfers the well plate to microplate washer 2, operation 2 also occupies one inlet plate position. At this time, in the scheduling of runs 5 and 6, operation 1 can only be postponed because there is no available plate position for the robotic arm to place the well plate. Operation 5, which transfers the well plate from the microplate washer to the random access plate station, may also be forced to be postponed because the outlet plate position is occupied.

Exemplarily, the random access plate station includes an inlet plate position 1, which provides well plates to microplate washer 1. After executing operation 2 in run 3, the second occupancy information of inlet plate position 1 is incremented by 1 (indicating occupied). At this time, operation 1 of run 5 includes transferring a well plate to inlet plate position 1, i.e., the first occupancy information indicates that the to-be-scheduled operation occupies inlet plate position 1. Based on the first occupancy information and the second occupancy information, it can be concluded that a position conflict exists at inlet plate position 1.

In combination with FIG. 2a, FIG. 2b, and the above description, it can be concluded that the working durations of the robotic arm and the microplate washer are fixed, while the durations of operations 2 and 6 can be changed according to the scheduling, i.e., the well plate may stay in the random access plate station depending on the scheduling situation. In other words, since the time of the position conflict cannot be determined, a value greater than the entire process duration can be set to postpone the earliest start time of the to-be-scheduled operation as much as possible. This can prevent erroneous startup in the event of a position conflict, thereby avoiding collisions and damage to devices and well plates.

Exemplarily, after determining one of the to-be-scheduled operations of the runs as the current-to-be-scheduled operation, the scheduling method for an automated process further includes: updating second occupancy information indicating position occupancy on the associated device by the current-to-be-scheduled operation.

As mentioned above, the time of the position conflict cannot be determined. Once the to-be-scheduled operation is determined as the current-to-be-scheduled operation, the position occupancy of the current-to-be-scheduled operation is also determined, i.e., the second occupancy information is a definite value. If the plate position is occupied, the value of the second occupancy information is incremented by 1; if the plate position is released, the value of the second occupancy information is decremented by 1.

Exemplarily, the occupancy of the microplate washer can also be considered as position occupancy. If the current-to-be-scheduled operation is operation 3 of run 3, since operation 3 releases inlet plate position 1 and occupies microplate washer 1, the occupancy of inlet plate position 1 is updated to 0, and the occupancy of microplate washer 1 is updated to 1. The specific position occupancy information is shown in the following table:

**Table 3**

| **Device Name** | **Plate Position, Lid Position Occupancy (0 indicates unoccupied, 1 indicates occupied)** |
|---|---|
| Sequential access plate station | |
| Random access plate station inlet | 0 |
| Random access plate station outlet | |
| Robotic arm | |
| Microplate Washer 1 | 1 |
| Microplate Washer 2 | |

Exemplarily, the scheduling method for an automated process further includes: determining a busy duration of the to-be-scheduled operation of each run at the current moment. The busy duration is equal to a cumulative duration of all unscheduled operations in the ordered operation set corresponding to the run at the current moment.

**Table 4**

| **Run** | **Current Operation** | **Earliest Start Time** | **Busy duration** |
|---|---|---|---|
| 1 | 7 | 406 | 45 |
| 2 | 5 | 451 | 91 |
| 3 | 2 | 406 | 406 |
| 4 | 1 | +∞ | 406 |
| 5 | 1 | +∞ | 452 |
| 6 | 1 | +∞ | 452 |

Run 1 has only operation 7 left unscheduled, so the busy duration is 45 seconds required for operation 7. Run 2 has operations 5, 6, and 7 left unscheduled, with a total of 91 seconds, so the busy duration is 91 seconds, and so on.

In step S160, determining one of the to-be-scheduled operations of the runs as the current-to-be-scheduled operation includes: adopting a priority assignment principle, determining a priority of the to-be-scheduled operation of each run at least based on the earliest start time of each to-be-scheduled operation at the current moment and the busy duration of each to-be-scheduled operation, and determining one with a highest priority as the current-to-be-scheduled operation. A to-be-scheduled operation with a smaller earliest start time has a higher priority; for a plurality of to-be-scheduled operations with a same earliest start time, one with a larger busy duration has a higher priority.

Continuing to refer to Table 4, Table 4 corresponds to an embodiment where the random access plate station can provide one inlet plate position. The earliest start times of the current operations of runs 4, 5, and 6 are extremely large because the first occupancy information of runs 4, 5, and 6 indicates that the inlet plate position is occupied, run 3 occupies the inlet plate position, the second occupancy information is 1, and there is a position conflict. At this time, runs 1, 2, and 3 can be scheduled. The earliest start times are those of runs 1 and 3. Comparing the busy durations, the busy duration of run 3 is larger, so the current operation 2 of run 3 is preferentially selected. Since operation 2 does not involve plate position release or new occupancy, it is not necessary to update the second occupancy information of the device associated with this operation.

In the above scheme, based on considering the earliest start time of each to-be-scheduled operation, the busy duration of each run is also fully considered. The to-be-scheduled operations in the run with a larger busy duration are given a higher priority weight for execution, thereby enabling a fast and accurate determination of the current current-to-be-scheduled operation, making the scheduling logic more reasonable and the execution efficiency of the automated process higher.

Exemplarily, the scheduling method for an automated process further includes: creating an index for each operation in the ordered operation set corresponding to each run, and determining the value of each index. An operation with a more front position in the ordered operation set has a smaller index value, and operations of a same type in different runs have a same index value.

The following will be described in detail with reference to Table 5.

**Table 5**

| **Run** | **Current Operation** | **Earliest Start Time** | **Busy duration** | **First Index** |
|---|---|---|---|---|
| 1 | 7 | 406 | 45 | 6 |
| 2 | 5 | 451 | 91 | 4 |
| 3 | 2 | 406 | 406 | 1 |
| 4 | 1 | +∞ | 406 | -1 |
| 5 | 1 | +∞ | 452 | -1 |
| 6 | 1 | +∞ | 452 | -1 |

Table 5 is generated by adding indices to Table 4. The index value is the sequence number of each operation. Exemplarily, the difference between the index values of two adjacent operations in the ordered operation set is 1. For example, the index value of operation 1 is 1, and the index value ofoperation 2 is 2. The index value is independent of the run; the index value of operation 1 of run 1 is 1, and the index value of operation 1 of run 2 is also 1.

Exemplarily, determining the priority of the to-be-scheduled operation of each run includes: determining the priority of the to-be-scheduled operation of each run based on the earliest start time of each to-be-scheduled operation at the current moment, the busy duration of each to-be-scheduled operation, and the value of the first index.

The first index can be the index of each to-be-scheduled operation, or it can be the index of the preceding operation of the to-be-scheduled operation. For example, the to-be-scheduled operation of run 1 is operation 7, and its preceding operation is operation 6, so the first index value is 6. For runs 4, 5, and 6, since there is no preceding operation, the first index value is a default value of -1. For a plurality of to-be-scheduled operations with the same earliest start time and the same busy duration, one with a smaller index value has a higher priority.

In this scheme, based on considering the earliest start time of each to-be-scheduled operation and the busy duration of each to-be-scheduled operation of each run, the task completion status of each run is also fully considered. The to-be-scheduled operations in the run with a lower task completion degree are given a higher priority weight for execution, thereby making the task completion status of each run more balanced and the scheduling more reasonable.

Exemplarily, after determining one of the to-be-scheduled operations of the runs as the current-to-be-scheduled operation, the scheduling method for an automated process further includes: updating the value of the index of the to-be-scheduled operation of the current run or the index of the preceding operation of the to-be-scheduled operation. The current run is the run to which the determined current-to-be-scheduled operation belongs, and the updated index value is equal to the pre-update index value plus 1.

As described above, once the to-be-scheduled operation is determined as the current-to-be-scheduled operation, it will not be modified, and new scheduling is only performed under the current pattern. Therefore, the to-be-scheduled operation of this run becomes the next operation of the current-to-be-scheduled operation. Taking the scheduling shown in Table 5 as an example, the first index is the index of the preceding operation of the to-be-scheduled operation. If operation 2 of run 3 is determined as the current-to-be-scheduled operation, then the first index is updated to 2, i.e., the to-be-scheduled operation at this time is operation 2, so the preceding operation of run 3 becomes operation 2, and the first index value is updated to 2.

Exemplarily, the scheduling method for an automated process further includes: creating a two-dimensional array for the scheduling result according to the run count, the ordered operation set, and the index values of the operations in the ordered operation set.

Exemplarily, according to the run count m and the number of steps n of the run, the operations of each run include:
{o11, o12, ..., oln}; {o21, o22, ..., o2n}; ...; {om1, om2, ..., omn}

Thus, the operation set composed of all operations of all runs is:
{o11, o12, ..., oln, o21, o22, ..., o2n, ..., om1, om2, ..., omn}

The variables to be optimized are the current pattern {t0, t1, t2, ..., tk, tk-1}, where k=m*n, indicating the start time of each run.

Thus, an array is obtained where o11 corresponds to t0, o12 corresponds to t1, ..., and omn corresponds to tk-1, thereby obtaining a two-dimensional array regarding the scheduling result. The two-dimensional array can be as shown in Table 6.

**Table 6**

| **Run** | **Step** | **Start Time** | **End Time** |
|---|---|---|---|
| 1 | 1 | -1 | -1 |
| ... | ... | ... | ... |
| 1 | 7 | -1 | -1 |
| 2 | 1 | -1 | -1 |
| ... | ... | ... | ... |
| 2 | 7 | -1 | -1 |
| 3 | 1 | -1 | -1 |
| ... | ... | ... | ... |
| 3 | 7 | -1 | -1 |
| 4 | 1 | -1 | -1 |
| ... | ... | ... | ... |
| 4 | 7 | -1 | -1 |
| 5 | 1 | -1 | -1 |
| ... | ... | ... | ... |
| 5 | 7 | -1 | -1 |
| 6 | 1 | -1 | -1 |
| ... | ... | ... | ... |
| 6 | 7 | -1 | -1 |

According to the data in Table 6 (the data in Table 6 is the initial value, and it is updated as the to-be-scheduled operation is gradually determined as the current-to-be-scheduled operation). The elements in the two-dimensional array include the index value of each operation in the ordered operation set corresponding to each run, the start execution time of each operation, the end execution time of each operation, and the sequence number of the run to which each operation belongs. The initial value of the start time is -1, indicating that the calculation has not started yet.

The above method has a small calculation amount and can effectively save computing resources and storage resources.

Exemplarily, after determining the start execution time and the end execution time of the current-to-be-scheduled operation, the scheduling method for an automated process further includes: updating the two-dimensional array according to the determined start execution time and end execution time of the current-to-be-scheduled operation, so that after all operations in each ordered operation set become the current-to-be-scheduled operations, the target process is executed according to the updated two-dimensional array. This scheme has an even smaller calculation amount, and the final stored scheduling result can be the updated two-dimensional data, which can effectively save computing resources and storage resources.

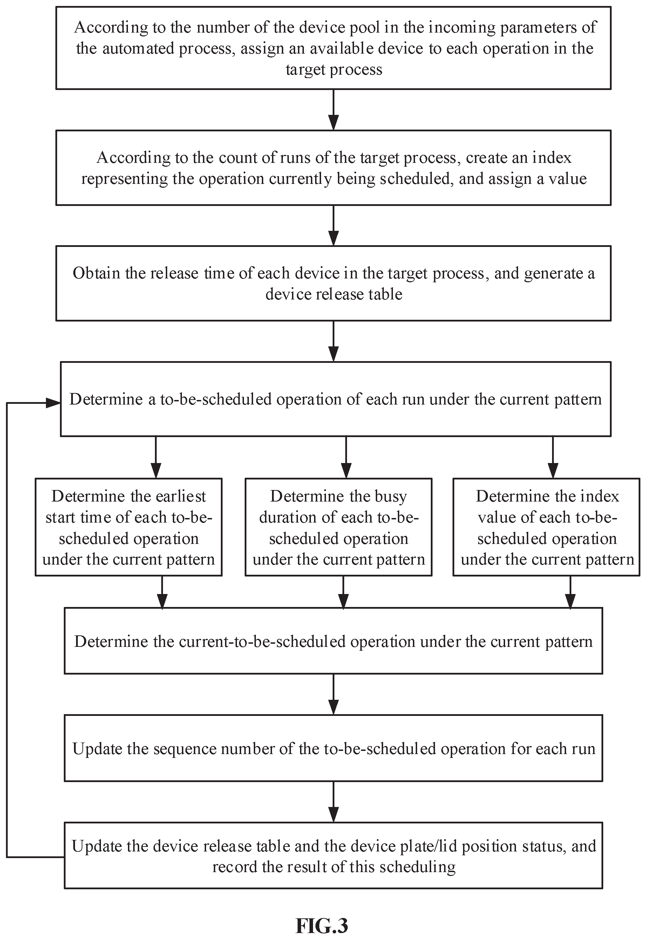

FIG. 3 shows a flowchart of a scheduling method for an automated process according to another embodiment of the present disclosure. As shown in FIG. 3, according to the numbering of the device pool in the incoming parameters, an available device can be assigned to each operation in the process. The incoming parameters refer to the data parsed from the process built by the user. The pre-treatment devices are allocated sequentially according to the number of devices and the run. Then, according to the count of runs, an index representing the operation currently being scheduled is created and assigned a value. Next, a two-dimensional array can be created to record the scheduling results for each run and each step, including the start time and the end time. Then, all device information is obtained, and a device release table is generated. The device release table defaults to 0, and the release time of each device can be modified during scheduling according to the current scheduling situation. Exemplarily, the to-be-scheduled operation of each run under the current pattern is determined. The earliest start time of each to-be-scheduled operation under the current pattern and the busy duration of each to-be-scheduled operation under the current pattern are respectively determined, the to-be-scheduled operation is selected and determined as the current-to-be-scheduled operation. The to-be-scheduled operation is updated, including that the sequence number of the to-be-scheduled operation of the run to which the to-be-scheduled operation determined as the current-to-be-scheduled operation in the current loop belongs is incremented by 1. After the determination, the device release time and the device plate/lid position status are updated, the result of this scheduling is recorded, and the process proceeds to the next loop.

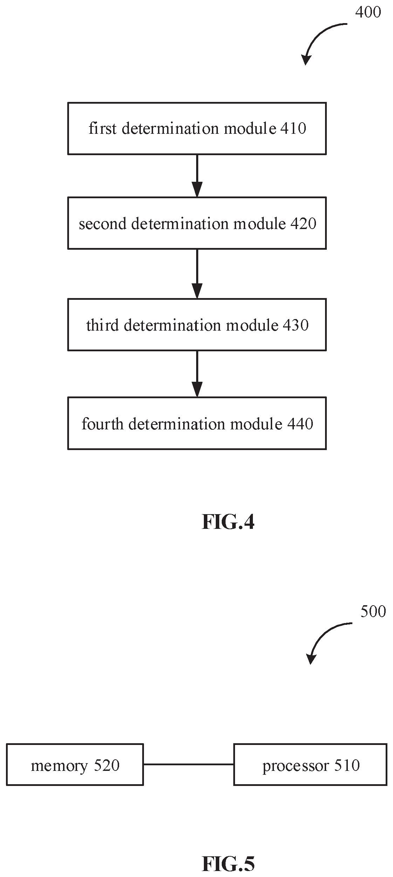

According to the second aspect of the present disclosure, there is also provided a scheduling system for an automated process. FIG. 4 shows a schematic block diagram of a scheduling system 400 for an automated process according to an embodiment of the present disclosure. As shown, the scheduling system 400 includes:
a first determination module 410, configured to determine, according to parameters of the automated process, a run count of a target process in the automated process and an ordered operation set corresponding to each run, wherein the run count indicates a number of repeated executions of the target process, the run count is greater than 1, and the ordered operation set is an ordered set of operations involved in completing a single execution of the target process;
a second determination module 420, configured to respectively determine, according to the run count and the ordered operation set, an earliest start time of a to-be-scheduled operation of each run at a current moment, wherein the to-be-scheduled operation of each run is a first unscheduled operation in the ordered operation set corresponding to the run, and an unscheduled operation is an operation for which an execution time has not been determined yet;
a third determination module 430, configured to determine, at least based on the earliest start time of each to-be-scheduled operation, one of the to-be-scheduled operations of the runs as a current-to-be-scheduled operation at the current moment; and
a fourth determination module 440, configured to determine an execution time of the current-to-be-scheduled operation at the current moment, and proceed to perform a step of determining the earliest start time of the to-be-scheduled operation of each run at a next moment, until scheduling of all operations in each ordered operation set is completed.

According to the third aspect of the present disclosure, there is also provided an electronic device. FIG. 5 shows a schematic block diagram of an electronic device 500 according to an embodiment of the present disclosure. As shown, the electronic device 500 includes a processor 510 and a memory 520. The memory 520 stores computer program instructions, and the computer program instructions, when executed by the processor 510, are used to implement the above-described scheduling method 100 for an automated process.

According to the fourth aspect of the present disclosure, there is also provided a storage medium. Program instructions are stored on the storage medium, and the program instructions, when executed, are used to implement the above-described scheduling method 100 for an automated process. The storage medium can include, for example, an erasable programmable read-only memory (EPROM), a portable read-only memory (CD-ROM), a USB memory, or any combination of the above storage media. The storage medium can be any combination of one or more computer-readable storage media.

Those of ordinary skill in the art can understand the specific implementation schemes and beneficial effects of the above-described scheduling system for an automated process, the electronic device, and the storage medium by reading the above related description of the scheduling method for an automated process. For brevity, details are not repeated here.

### Embodiments

Embodiment 1. A scheduling method for an automated process, including:
determining, according to parameters of the automated process, a run count of a target process in the automated process and an ordered operation set corresponding to each run, wherein the run count indicates a number of repeated executions of the target process, the run count is greater than 1, and the ordered operation set is an ordered set of operations involved in completing a single execution of the target process;
respectively determining, according to the run count and the ordered operation set, an earliest start time of a to-be-scheduled operation of each run at a current moment, wherein the to-be-scheduled operation of each run is a first unscheduled operation in the ordered operation set corresponding to the run, and the unscheduled operation is an operation for which an execution time has not been determined yet;
determining, at least based on the earliest start time of each to-be-scheduled operation, one of the to-be-scheduled operations of the runs as a current-to-be-scheduled operation at the current moment; and
determining an execution time of the current-to-be-scheduled operation at the current moment, and proceeding to perform a step of determining the earliest start time of the to-be-scheduled operation of each run at a next moment, until scheduling of all operations in each ordered operation set is completed.

Embodiment 2. The scheduling method for an automated process according to embodiment 1, characterized in that determining the execution time of the current-to-be-scheduled operation at the current moment includes:
determining an earliest start time of the current-to-be-scheduled operation as a start execution time of the current-to-be-scheduled operation; and
calculating a sum of the determined start execution time of the current-to-be-scheduled operation and a duration of the current-to-be-scheduled operation as an end execution time of the current-to-be-scheduled operation.

Embodiment 3. The scheduling method for an automated process according to embodiment 1 or 2, characterized in that respectively determining the earliest start time of the to-be-scheduled operation of each run at the current moment includes:
determining the to-be-scheduled operation of each run at the current moment; and
for the to-be-scheduled operation of each run,
determining, according to the ordered operation set, a preceding operation of the to-be-scheduled operation, wherein in the ordered operation set corresponding to the run, the preceding operation is an operation immediately preceding the to-be-scheduled operation; and
determining the earliest start time of the to-be-scheduled operation at least based on an end time of the preceding operation.

Embodiment 4. The scheduling method for an automated process according to any one of embodiments 1 to 3, characterized in that the method further includes:
determining, according to the parameters of the automated process, an execution device set of the target process;
determining, according to the run count, the execution device set, and the ordered operation set, devices associated with respective operations in the ordered operation set, wherein the devices associated with respective operations at least comprise execution devices of the operations, and the execution device is a device for executing the operation; and
determining a release time of each of the devices associated with respective operations at the current moment, wherein the release time indicates an idle time of the device, and at an initial moment, the release time of each device is 0.

Embodiment 5. The scheduling method for an automated process according to any one of embodiments 1 to 4, characterized in that determining the earliest start time of the to-be-scheduled operation at least based on the end time of the preceding operation further includes:
determining a maximum value of the release times of the devices associated with the to-be-scheduled operation at the current moment;
determining the earliest start time of the to-be-scheduled operation according to the maximum value and the end time of the preceding operation.

Embodiment 6. The scheduling method for an automated process according to any one of embodiments 1 to 5, characterized in that after determining the start execution time and the end execution time of the current-to-be-scheduled operation, the method further includes:
updating the release time of the execution device of the current-to-be-scheduled operation to be the end execution time of the current-to-be-scheduled operation.

Embodiment 7. The scheduling method for an automated process according to any one of embodiments 1 to 6, characterized in that determining the earliest start time of the to-be-scheduled operation includes:
determining a larger one of the maximum value and the end time of the preceding operation as the earliest start time of the to-be-scheduled operation.

Embodiment 8. The scheduling method for an automated process according to any one of embodiments 1 to 7, characterized in that determining the earliest start time of the to-be-scheduled operation includes:
determining, according to first occupancy information indicating upcoming position occupancy on the associated device by the to-be-scheduled operation and second occupancy information indicating position occupancy on the associated device at the current moment, whether a position conflict exists for the to-be-scheduled operation; and
if it is determined that a position conflict exists for the to-be-scheduled operation, determining a preset supremum time as the earliest start time of the to-be-scheduled operation; wherein the preset supremum time is greater than the end time of the preceding operation and the release time of any device.

Embodiment 9. The scheduling method for an automated process according to any one of embodiments 1 to 8, characterized in that after determining one of the to-be-scheduled operations of the runs as the current-to-be-scheduled operation, the method further includes:
updating the second occupancy information indicating position occupancy on the associated device by the current-to-be-scheduled operation.

Embodiment 10. The scheduling method for an automated process according to any one of embodiments 1 to 9, characterized in that the method further includes:
determining a busy duration of the to-be-scheduled operation of each run at the current moment, wherein the busy duration is equal to a cumulative duration of all unscheduled operations in the ordered operation set corresponding to the run at the current moment;
determining one of the to-be-scheduled operations of the runs as the current-to-be-scheduled operation includes:
   adopting a priority assignment principle, determining a priority of the to-be-scheduled operation of each run at least based on the earliest start time of each to-be-scheduled operation at the current moment and the busy duration of each to-be-scheduled operation, and determining one with a highest priority as the current-to-be-scheduled operation;
   wherein a to-be-scheduled operation with a smaller earliest start time has a higher priority; and for a plurality of to-be-scheduled operations with a same earliest start time, one with a larger busy duration has a higher priority.

Embodiment 11. The scheduling method for an automated process according to any one of embodiments 1 to 10, characterized in that the method further includes:
creating an index for each operation in the ordered operation set corresponding to each run, and determining an index value of each index, wherein an operation with a more front position in the ordered operation set has a smaller index value, and operations of a same type in different runs have a same index value;
determining the priority of the to-be-scheduled operation of each run includes:
   determining the priority of the to-be-scheduled operation of each run based on the earliest start time of each to-be-scheduled operation at the current moment, the busy duration of each to-be-scheduled operation, and a value of a first index;
   wherein the first index is an index of each to-be-scheduled operation or an index of the preceding operation of the to-be-scheduled operation, and for a plurality of to-be-scheduled operations with a same earliest start time and a same busy duration, one with a smaller index value has a higher priority.

Embodiment 12. The scheduling method for an automated process according to any one of embodiments 1 to 11, characterized in that a difference between index values of two adjacent operations in the ordered operation set is 1, and after determining one of the to-be-scheduled operations of the runs as the current-to-be-scheduled operation, the method further includes:
updating an index value of the index of the to-be-scheduled operation of a current run or an index of the preceding operation of the to-be-scheduled operation, wherein the current run is a run to which the determined current-to-be-scheduled operation belongs, and an updated index value is equal to a pre-update index value plus 1.

Embodiment 13. The scheduling method for an automated process according to any one of embodiments 1 to 12, characterized in that the method further includes:
creating a two-dimensional array for a scheduling result according to the run count, the ordered operation set, and the index values of the operations in the ordered operation set;
wherein elements in the two-dimensional array comprise an index value of each operation in the ordered operation set corresponding to each run, a start execution time of each operation, an end execution time of each operation, and a sequence number of the run to which each operation belongs;
after determining the start execution time and the end execution time of the current-to-be-scheduled operation, the method further includes:
   updating the two-dimensional array according to the determined start execution time and end execution time of the current-to-be-scheduled operation, so that after all operations in each ordered operation set become the current-to-be-scheduled operations, the target process is executed according to the updated two-dimensional array.

Embodiment 14. A scheduling system for an automated process, including:
a first determination module, configured to determine, according to parameters of the automated process, a run count of a target process in the automated process and an ordered operation set corresponding to each run, wherein the run count indicates a number of repeated executions of the target process, the run count is greater than 1, and the ordered operation set is an ordered set of operations involved in completing a single execution of the target process;
a second determination module, configured to respectively determine, according to the run count and the ordered operation set, an earliest start time of a to-be-scheduled operation of each run at a current moment, wherein the to-be-scheduled operation of each run is a first unscheduled operation in the ordered operation set corresponding to the run, and the unscheduled operation is an operation for which an execution time has not been determined yet;
a third determination module, configured to determine, at least based on the earliest start time of each to-be-scheduled operation, one of the to-be-scheduled operations of the runs as a current-to-be-scheduled operation at the current moment; and
a fourth determination module, configured to determine an execution time of the current-to-be-scheduled operation at the current moment, and proceed to perform a step of determining the earliest start time of the to-be-scheduled operation of each run at a next moment, until scheduling of all operations in each ordered operation set is completed.

Embodiment 15. An electronic device, including a processor and a memory, characterized in that the memory stores computer program instructions, and the computer program instructions, when executed by the processor, implement the scheduling method for an automated process according to any one of embodiments 1 to 13.

Embodiment 16. A storage medium, having program instructions stored thereon, characterized in that the program instructions, when executed, implement the scheduling method for an automated process according to any one of embodiments 1 to 13.

Although the exemplary embodiments have been described herein with reference to the accompanying drawings, it should be understood that the above exemplary embodiments are merely illustrative and are not intended to limit the scope of the present disclosure. Those of ordinary skill in the art can make various changes and modifications thereto without departing from the scope and spirit of the present disclosure. All such changes and modifications are intended to be included within the scope of the present disclosure as claimed in the appended claims.

Those of ordinary skill in the art can appreciate that the units and algorithm steps of the examples described in conjunction with the embodiments disclosed herein can be implemented in electronic hardware, or a combination of computer software and electronic hardware. Whether these functions are performed in hardware or software depends on the specific application and design constraints of the technical solution. A professional technician may use different methods to implement the described functions for each specific application, but such implementation should not be considered beyond the scope of the present disclosure.

In the several embodiments provided in the present disclosure, it should be understood that the disclosed devices and methods may be implemented in other ways. For example, the device embodiments described above are merely illustrative. For example, the division of the units is merely a logical function division, and there may be other division methods in actual implementation. For example, multiple units or components may be combined or integrated into another device, or some features may be omitted or not executed.

In the specification provided herein, numerous specific details are set forth. However, it is understood that the embodiments of the present disclosure may be practiced without these specific details. In some instances, well-known methods, structures, and techniques are not shown in detail so as not to obscure the understanding of this specification.

Similarly, it should be understood that in order to streamline the present disclosure and help understand one or more of the various inventive aspects, in the description of the exemplary embodiments of the present disclosure, various features of the present disclosure are sometimes grouped together into a single embodiment, figure, or description thereof. However, the present disclosure should not be interpreted as reflecting an intention that the claimed present disclosure requires more features than those expressly recited in each claim. Rather, as reflected in the corresponding claims, the inventive point lies in that the corresponding technical problem can be solved with features fewer than all the features of a single disclosed embodiment. Therefore, the claims following the detailed description are hereby expressly incorporated into this detailed description, with each claim standing on its own as a separate embodiment of the present disclosure.

Those skilled in the art can understand that, except for mutually exclusive features, any combination of all features disclosed in this specification (including the accompanying claims, abstract, and drawings) and all processes or units of any method or device so disclosed may be employed. Unless expressly stated otherwise, each feature disclosed in this specification (including the accompanying claims, abstract, and drawings) may be replaced by alternative features serving the same, equivalent, or similar purpose.

Furthermore, those skilled in the art will understand that although some embodiments described herein include some features but not others included in other embodiments, combinations of features of different embodiments are within the scope of the present disclosure and form different embodiments. For example, in the claims, any one of the claimed embodiments can be used in any combination.

The various component embodiments of the present disclosure may be implemented in hardware, or in software modules running on one or more processors, or in a combination thereof. Those skilled in the art should understand that a microprocessor or a digital signal processor (DSP) may be used in practice to implement some or all functions of some modules in the scheduling system for an automated process according to the embodiments of the present disclosure. The present disclosure may also be implemented as an apparatus program (e.g., a computer program and a computer program product) for executing part or all of the methods described herein. Such a program implementing the present disclosure may be stored on a computer-readable medium, or may have the form of one or more signals. Such a signal may be downloaded from an Internet website, or provided on a carrier signal, or provided in any other form.

It should be noted that the above-described embodiments are intended to illustrate the present disclosure and not to limit it, and those skilled in the art can design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present disclosure may be implemented by means of hardware comprising several different elements and by means of a suitably programmed computer. In a unit claim enumerating several means, several of these means may be embodied by one and the same item of hardware. The use of the words first, second, third, etc. does not indicate any order. These words may be interpreted as names.

The above is only the specific embodiment of the present disclosure or the description of the specific embodiment. The scope of protection of the present disclosure is not limited thereto. Any person skilled in the art can easily conceive of changes or substitutions within the technical scope disclosed in the present disclosure, which should be covered within the scope of protection of the present disclosure. The scope of protection of the present disclosure shall be subject to the scope of protection of the claims.

## Claims

1. A scheduling method for an automated process, **characterized by** comprising:
determining, according to parameters of the automated process, a run count of a target process in the automated process and an ordered operation set corresponding to each run, wherein the run count indicates a number of repeated executions of the target process, the run count is greater than 1, and the ordered operation set is an ordered set of operations involved in completing a single execution of the target process;
respectively determining, according to the run count and the ordered operation set, an earliest start time of a to-be-scheduled operation of each run at a current moment, wherein the to-be-scheduled operation of each run is a first unscheduled operation in the ordered operation set corresponding to the run, and the unscheduled operation is an operation for which an execution time has not been determined yet;
determining, at least based on the earliest start time of each to-be-scheduled operation, one of the to-be-scheduled operations of the runs as a current-to-be-scheduled operation at the current moment; and
determining an execution time of the current-to-be-scheduled operation at the current moment, and proceeding to perform a step of determining the earliest start time of the to-be-scheduled operation of each run at a next moment, until scheduling of all operations in each ordered operation set is completed.

2. The scheduling method for an automated process according to claim 1, **characterized in that** determining the execution time of the current-to-be-scheduled operation at the current moment comprises:
determining an earliest start time of the current-to-be-scheduled operation as a start execution time of the current-to-be-scheduled operation; and
calculating a sum of the determined start execution time of the current-to-be-scheduled operation and a duration of the current-to-be-scheduled operation as an end execution time of the current-to-be-scheduled operation.

3. The scheduling method for an automated process according to claim 1, **characterized in that** respectively determining the earliest start time of the to-be-scheduled operation of each run at the current moment comprises:
determining the to-be-scheduled operation of each run at the current moment; and
for the to-be-scheduled operation of each run,
determining, according to the ordered operation set, a preceding operation of the to-be-scheduled operation, wherein in the ordered operation set corresponding to the run, the preceding operation is an operation immediately preceding the to-be-scheduled operation; and
determining the earliest start time of the to-be-scheduled operation at least based on an end time of the preceding operation.

4. The scheduling method for an automated process according to claim 3, **characterized in that** the method further comprises:
determining, according to the parameters of the automated process, an execution device set of the target process;
determining, according to the run count, the execution device set, and the ordered operation set, devices associated with respective operations in the ordered operation set, wherein the devices associated with respective operations at least comprise execution devices of the operations, and the execution device is a device for executing the operation; and
determining a release time of each of the devices associated with respective operations at the current moment, wherein the release time indicates an idle time of the device, and at an initial moment, the release time of each device is 0.

5. The scheduling method for an automated process according to claim 4, **characterized in that** determining the earliest start time of the to-be-scheduled operation at least based on the end time of the preceding operation further comprises:
determining a maximum value of the release times of the devices associated with the to-be-scheduled operation at the current moment;
determining the earliest start time of the to-be-scheduled operation according to the maximum value and the end time of the preceding operation.

6. The scheduling method for an automated process according to claim 5, **characterized in that** after determining the start execution time and the end execution time of the current-to-be-scheduled operation, the method further comprises:
updating the release time of the execution device of the current-to-be-scheduled operation to be the end execution time of the current-to-be-scheduled operation.

7. The scheduling method for an automated process according to claim 5, **characterized in that** determining the earliest start time of the to-be-scheduled operation comprises:
determining a larger one of the maximum value and the end time of the preceding operation as the earliest start time of the to-be-scheduled operation.

8. The scheduling method for an automated process according to any one of claims 4 to 7, **characterized in that** determining the earliest start time of the to-be-scheduled operation comprises:
determining, according to first occupancy information indicating upcoming position occupancy on the associated device by the to-be-scheduled operation and second occupancy information indicating position occupancy on the associated device at the current moment, whether a position conflict exists for the to-be-scheduled operation; and
if it is determined that a position conflict exists for the to-be-scheduled operation, determining a preset supremum time as the earliest start time of the to-be-scheduled operation; wherein the preset supremum time is greater than the end time of the preceding operation and the release time of any device.

9. The scheduling method for an automated process according to claim 8, **characterized in that** after determining one of the to-be-scheduled operations of the runs as the current-to-be-scheduled operation, the method further comprises:
updating the second occupancy information indicating position occupancy on the associated device by the current-to-be-scheduled operation.

10. The scheduling method for an automated process according to any one of claims 1 to 7, **characterized in that** the method further comprises:
determining a busy duration of the to-be-scheduled operation of each run at the current moment, wherein the busy duration is equal to a cumulative duration of all unscheduled operations in the ordered operation set corresponding to the run at the current moment;
determining one of the to-be-scheduled operations of the runs as the current-to-be-scheduled operation comprises:
adopting a priority assignment principle, determining a priority of the to-be-scheduled operation of each run at least based on the earliest start time of each to-be-scheduled operation at the current moment and the busy duration of each to-be-scheduled operation, and determining one with a highest priority as the current-to-be-scheduled operation;
wherein a to-be-scheduled operation with a smaller earliest start time has a higher priority; and for a plurality of to-be-scheduled operations with a same earliest start time, one with a larger busy duration has a higher priority.

11. The scheduling method for an automated process according to claim 10, **characterized in that** the method further comprises:
creating an index for each operation in the ordered operation set corresponding to each run, and determining an index value of each index, wherein an operation with a more front position in the ordered operation set has a smaller index value, and operations of a same type in different runs have a same index value;
determining the priority of the to-be-scheduled operation of each run comprises:
determining the priority of the to-be-scheduled operation of each run based on the earliest start time of each to-be-scheduled operation at the current moment, the busy duration of each to-be-scheduled operation, and a value of a first index;
wherein the first index is an index of each to-be-scheduled operation or an index of the preceding operation of the to-be-scheduled operation, and for a plurality of to-be-scheduled operations with a same earliest start time and a same busy duration, one with a smaller index value has a higher priority.

12. The scheduling method for an automated process according to claim 11, **characterized in that** a difference between index values of two adjacent operations in the ordered operation set is 1, and after determining one of the to-be-scheduled operations of the runs as the current-to-be-scheduled operation, the method further comprises:
updating an index value of the index of the to-be-scheduled operation of a current run or an index of the preceding operation of the to-be-scheduled operation, wherein the current run is a run to which the determined current-to-be-scheduled operation belongs, and an updated index value is equal to a pre-update index value plus 1.

13. The scheduling method for an automated process according to any one of claims 3 to 7, **characterized in that** the method further comprises:
creating a two-dimensional array for a scheduling result according to the run count, the ordered operation set, and the index values of the operations in the ordered operation set;
wherein elements in the two-dimensional array comprise an index value of each operation in the ordered operation set corresponding to each run, a start execution time of each operation, an end execution time of each operation, and a sequence number of the run to which each operation belongs;
after determining the start execution time and the end execution time of the current-to-be-scheduled operation, the method further comprises:
updating the two-dimensional array according to the determined start execution time and end execution time of the current-to-be-scheduled operation, so that after all operations in each ordered operation set become the current-to-be-scheduled operations, the target process is executed according to the updated two-dimensional array.

14. A scheduling system for an automated process, **characterized by** comprising:
a first determination module, configured to determine, according to parameters of the automated process, a run count of a target process in the automated process and an ordered operation set corresponding to each run, wherein the run count indicates a number of repeated executions of the target process, the run count is greater than 1, and the ordered operation set is an ordered set of operations involved in completing a single execution of the target process;
a second determination module, configured to respectively determine, according to the run count and the ordered operation set, an earliest start time of a to-be-scheduled operation of each run at a current moment, wherein the to-be-scheduled operation of each run is a first unscheduled operation in the ordered operation set corresponding to the run, and the unscheduled operation is an operation for which an execution time has not been determined yet;
a third determination module, configured to determine, at least based on the earliest start time of each to-be-scheduled operation, one of the to-be-scheduled operations of the runs as a current-to-be-scheduled operation at the current moment; and
a fourth determination module, configured to determine an execution time of the current-to-be-scheduled operation at the current moment, and proceed to perform a step of determining the earliest start time of the to-be-scheduled operation of each run at a next moment, until scheduling of all operations in each ordered operation set is completed.

15. An electronic device, comprising a processor and a memory, **characterized in that** the memory stores computer program instructions, and the computer program instructions, when executed by the processor, implement the scheduling method for an automated process according to any one of claims 1 to 13.

16. A storage medium, having program instructions stored thereon, **characterized in that** the program instructions, when executed, implement the scheduling method for an automated process according to any one of claims 1 to 13.
